# EUROPEAN PATENT SPECIFICATION

(11) **EP 2 347 164 B1**
(45) Date of publication and mention of the grant of the patent: **06.11.2013**
(21) Application number: 09819801.3
(22) Date of filing: 07.10.2009
(51) Int. Cl.: F16M 3/00, F02B 63/04

(54) **PORTABLE AIR COMPRESSOR**
TRAGBARER LUFTVERDICHTER
COMPRESSEUR D'AIR PORTABLE

(30) Priority: 07.10.2008 US 103407 P
(43) Date of publication of application: 27.07.2011
(73) Proprietor: Techtronic Power Tools Technology Limited, Road Town, Tortola (VG)
(72) Inventor: GATHERS, Adam, Anderson SC 29621 (US); PELOQUIN, Ryan, Simpsonville SC 29681 (US); SADKOWSKI, William, E., Anderson SC 29621 (US); SCHULTZ, Joseph, Anderson SC 29625 (US)
(74) Representative: Stevenson-Hill, Jack Patrick
(86) International application number: PCT/US2009/059812
(87) International publication number: WO 2010/042597

(56) References cited:
- WO-A1-01/24941
- CN-Y- 2 934 860
- US-A- 2 648 133
- US-A- 2 954 253
- US-A- 4 902 226
- US-A- 5 378 119
- US-A- 5 749 958
- US-A1- 2006 067 836
- US-A1- 2006 104 830
- US-A1- 2006 104 830
- US-A1- 2008 187 447
- US-B2- 6 892 914
- US-B2- 7 413 414

## Description

### BACKGROUND

The present invention relates to air compressors and, more particularly, to portable air compressors.

US 2006/0104830 relates to an elastomeric base for pressure vessels, according to the abstract of which, an clastomeric base for a pressure vessel is configured to be adhesively secured to the bottom of the vessel in order to eliminate the problems caused by welding of steel legs. The base includes a surface configured to correspond with a curved surface of the compressor vessel. Advantageously, the base may be formed of an elastomeric material, a plastic, or of an elastomeric material co-molded with a ridged plastic.

US 2008/087447 relates to an air compressor, according to the abstract of which, there is provided an air compressor package that includes a pancake air tank, a motor and a compressor that is driven by the motor. The compressor is coupled in fluid communication with the pancake air tank. The motor and the compressor are arranged relative to the paneake air tank such that a plane taken through the equator of the pancake air tank passes through the motor and the compressor.

WO 01/24941 relates to a portable tool box, according to the abstract of which there is provided a portable tool box for an air-powered tool which includes a container having a lid and an air vent. Within the container there is an electrically operated air compressor, a pneumatic hose and the tool.

### SUMMARY

The present invention is defined by the appended claim 1:9. In one embodiment, the invention provides an air compressor including a housing assembly and a compressor system positioned substantially within the housing assembly The compressor system is operable to compress ambient air. The air compressor also includes a tank positioned substantially within the housing assembly in communication with the compressor system to receive pressurized air from the compressor system. The tank has a generally flattened spherical shape with a diameter and a width that is less than the diameter. The tank is oriented generally vertically within the housing assembly such that the diameter represents a height of the tank.

In another embodiment, the invention provides an air compressor including a housing assembly having a first panel, a second panel extending generally perpendicularly from the first panel, a first foot coupled to and extending from the first panel, and a second foot coupled to and extending from the second panel. The air compressor also includes a wheel rotatably coupled to the housing assembly adjacent to the first and second panels, and a compressor system positioned substantially within the housing assembly. The compressor system is operable to compress ambient air. The air compressor further includes a tank positioned substantially within the housing assembly in communication with the compressor system to receive pressurized air from the compressor system. The housing assembly is pivotable about the wheel between a first position, in which the first foot engages a surface during operation of the air compressor, and a second position, in which the second foot and the wheel engage the surface during storage of the air compressor.

In yet another embodiment, the invention provides an air compressor including a housing having a first panel, a second panel extending generally perpendicularly from the first panel, a third panel spaced apart from the second panel and extending generally perpendicularly from the first panel, a first foot coupled to and extending from the first panel, and a second foot coupled to and extending from the second panel. The air compressor also includes a first wheel rotatably coupled to the housing assembly adjacent to the first and second panels, a second wheel rotatably coupled to the housing assembly opposite the first wheel and adjacent to the first and second panels, a lift handle coupled to the third panel of the housing assembly, and a compressor system positioned substantially within the housing assembly. The compressor system is operable to compress ambient air. The air compressor further includes a control assembly coupled to the second panel of the housing assembly. The control assembly is operable to monitor and control operation of the compressor system. The air compressor also includes a tank positioned substantially within the housing assembly in communication with the compressor system to receive pressurized air from the compressor system. The tank has a generally flattened spherical shape with a diameter and a width that is less than the diameter. The tank is oriented generally vertically within the housing assembly such that the diameter represents a height of the tank. The housing assembly is pivotable about the wheels between a first position, in which the first foot engages a surface during operation of the air compressor, and a second position, in which the second foot and the wheels engage the surface during storage of the air compressor.

Other aspects of the invention will become apparent by consideration of the detailed description and accompanying drawings.

### BRIEF DESCRIPTION OF THE DRAWINGS

Fig. 1 is a front perspective view of a portable air compressor according to one embodiment of the invention.

Fig. 2 is a rear perspective view of the portable air compressor shown in Fig. 1.

Fig. 3 is a side view of the portable air compressor shown in Fig. 1 when the portable air compressor is in an operating position.

Fig. 4 is a side view of the portable air compressor shown in Fig. 1 when the portable air compressor is in a storage position.

Fig. 5 is an exploded perspective view of the portable air compressor shown in Fig. 1.

Fig. 6 is an enlarged rear perspective view of a portion of the portable air compressor shown in Fig. 1, the portable air compressor including a pull handle in a raised position.

Fig. 7 is an enlarged view of another portion of the portable air compressor shown in Fig. 1.

Fig. 8 is an enlarged perspective view of a control assembly and an air hose connector for use with the portable air compressor shown in Fig. 1.

Fig. 9 is an enlarged side view of a portion of the portable air compressor shown in Fig. 1, the portable air compressor including a tool connecting portion.

Fig. 10 is the enlarged side view of the portion of the portable air compressor shown in Fig. 9 with a pneumatic tool supported by the tool connecting portion.

Fig. 11 is an enlarged side view of a portion of a portable air compressor including another embodiment of a tool connecting portion.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein are for the purpose of description and should not be regarded as limiting. The scope of the present invention is defined by the claims.

### DETAILED DESCRIPTION

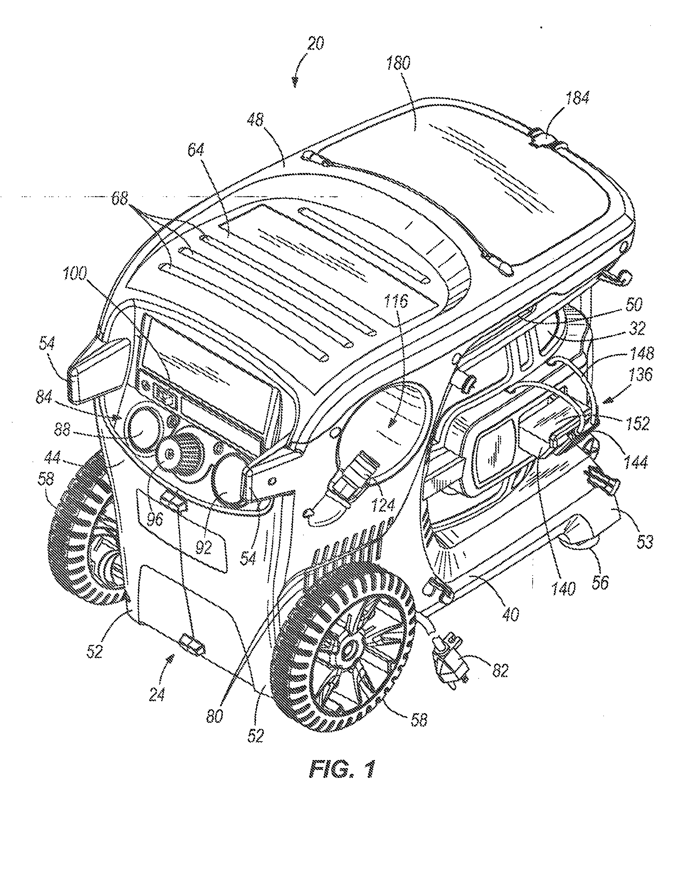

Figs. 1-4 illustrate an air compressor 20 according to one embodiment of the invention. The illustrated air compressor 20 is a portable air compressor that is transportable between worksites (e.g., construction sites, garages, etc.). The compressor 20 provides a source of compressed air for performing various tasks such as operating pneumatic power tools, filling vehicle tires, or the like. In the illustrated embodiment, the portable air compressor 20 is designed as a compact and relatively narrow unit that easily fits within a vehicle for transport and is movable around a worksite by a single user.

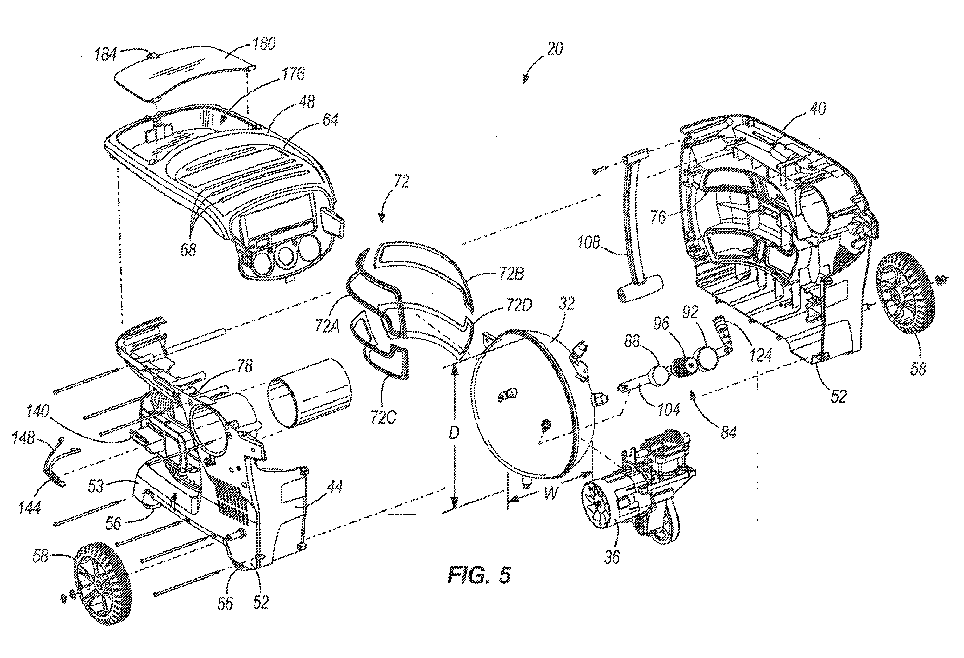

As shown in Figs. 1-5, the portable air compressor 20 includes a housing or frame assembly 24, an air tank 32, and a motor/compressor system 36 (Fig. 5). The illustrated housing assembly 24 includes two side housing portions 40, 44 and an upper housing portion 48 that are coupled together via fasteners (e.g., bolts, screws, rivets, or the like) to define an exterior of the compressor 20. When assembled, the housing portions 40, 44, 48 define six sides or panels such that the housing assembly 24 has a generally rectangular box or cuboid shape. The housing portions 40, 44, 48 are composed of a plastic material, but may alternatively be composed of other suitable lightweight materials or combinations of materials. A side lift handle 50 is formed in each side housing portion 40, 44 to facilitate lifting and carrying the compressor 20.

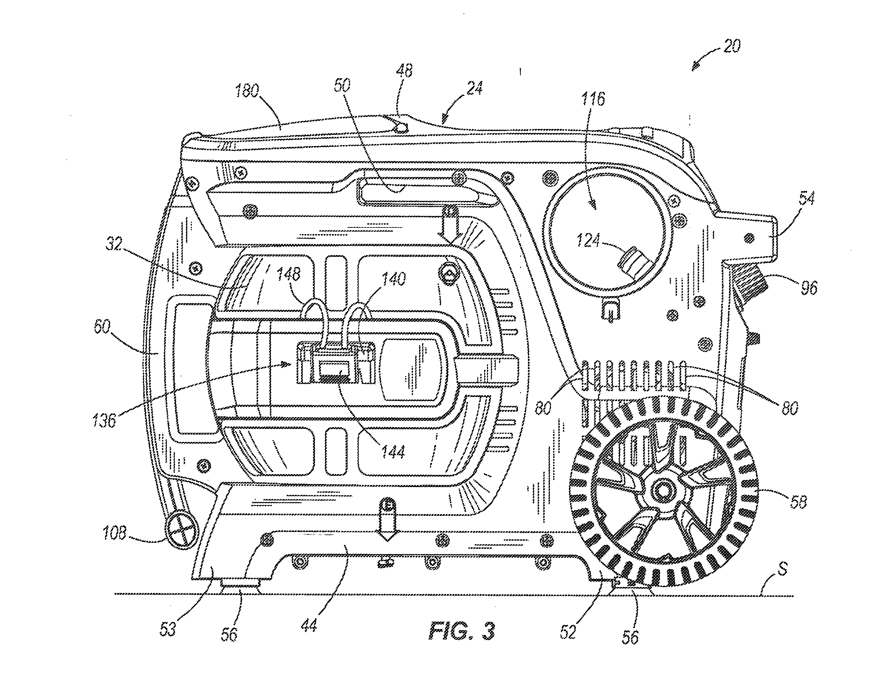

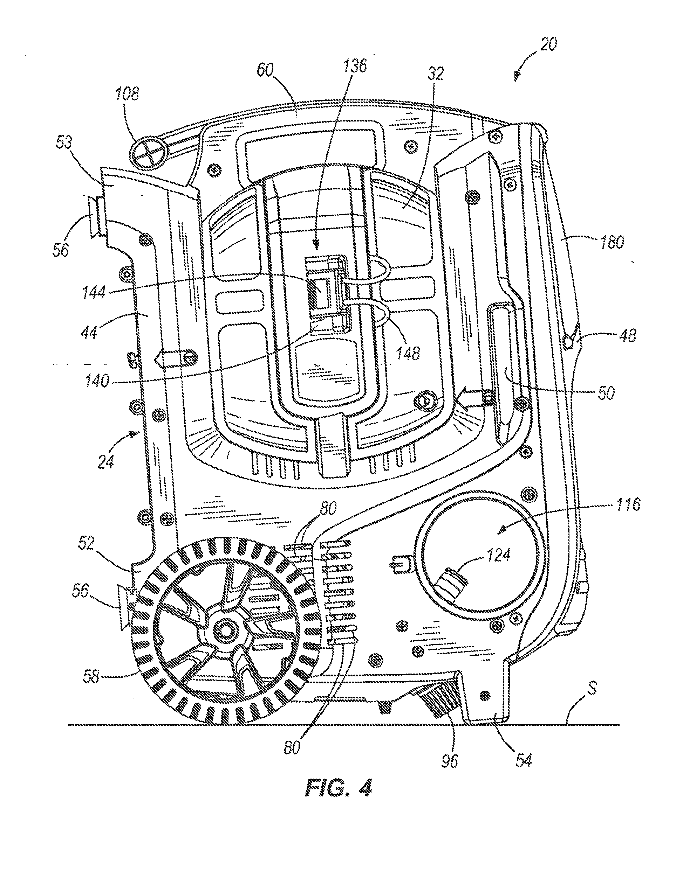

The housing assembly 24 includes two front feet 52, two rear feet 53, and two secondary feet 54. The front and rear feet 52, 53 extend from a lower panel of the housing assembly 24 and are integrally formed as a single piece with one of the side housing portions 40, 44. In other embodiments, the front feet 52 or the rear feet 53 may be removably coupled to the side housing portions 40, 44. The front and rear feet 52, 53 help support the compressor 20 on the ground or other surface S when the housing assembly 24 is in an operating position (Fig. 3). The secondary feet 54 extend from a front panel of the housing assembly 24 and are partially defined by the side housing portions 40, 44 and by the upper housing portion 48. Similar to the feet 52, 53, the secondary feet 54 may alternatively be removably coupled to the housing assembly 24. The secondary feet 54 help support the compressor 20 on the surface S when the housing assembly 24 is in a storage position (Fig. 4). In the illustrated embodiment, an elastomeric member 56, such as a rubber pad, is coupled to the bottom of each front foot 52 and each rear foot 53 to dampen vibrations and increase stability of the housing assembly 24 when the compressor 20 is in use.

The illustrated air compressor 20 includes two wheels 58 rotatably coupled to the housing assembly 24. Each wheel 58 is coupled to one of the side housing portions 40, 44 adjacent to the front feet 52. As shown in Fig. 3, when the housing assembly 24 is in the operating position, the front and rear feet 52 lift the wheels 58 slightly apart from the surface S to inhibit the compressor 20 from unintentionally sliding or rolling along the surface S. From this position, the housing assembly 24 may be tilted or pivoted onto the wheels 58 to move the air compressor 20 along the surface S. As shown in Fig. 4, when the housing assembly 24 is in the storage position, the wheels 58 directly engage the surface S to help support the compressor 20. In the illustrated embodiment, the wheels 58 are idle wheels and are formed of hard plastic material. In other embodiments, the compressor 20 may include fewer or more wheels 58, each wheel 58 may be a driven wheel, or each wheel 58 may include an inflatable tire.

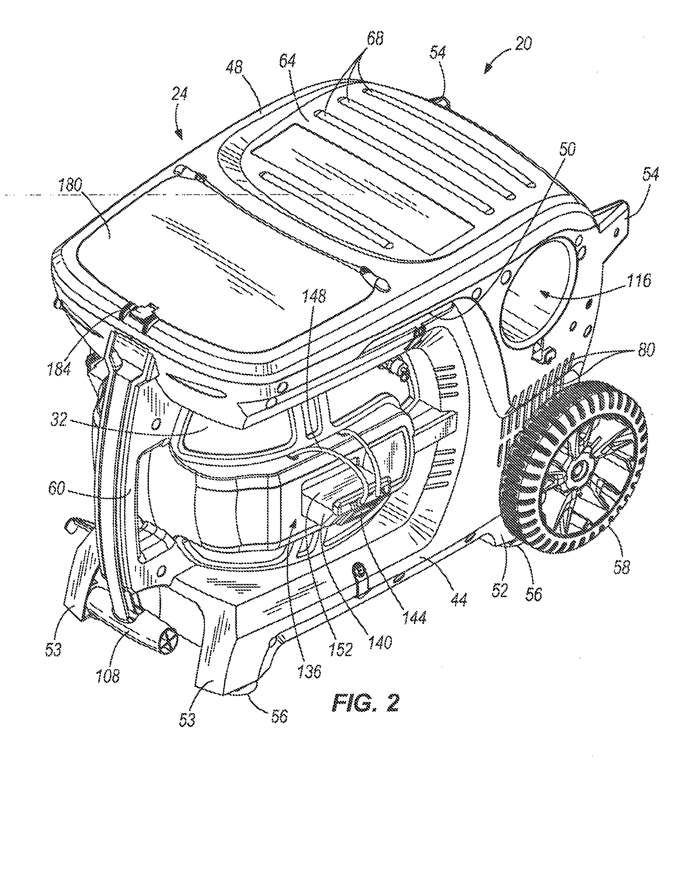

As shown in Figs. 2 and 3, the two side housing portions 40, 44 are coupled together to define a lift handle 60. In the illustrated embodiment, the lift handle 60 is integrally formed as a single piece with the housing portions 40, 44 on a rear panel of the housing assembly 24. In other embodiments, the lift handle 60 may be a separate component that is secured to the housing assembly 24 with bolts, screws, adhesives, or the like. The lift handle 60 provides a strong location on the housing assembly 24 for a user or lifting device to grab when the compressor 20 is in the storage position (Fig. 4). That is, the lift handle 60 is shaped and contoured as a comfortable location for a user to grip the housing assembly 24 when loading and unloading the compressor 20 from, for example, a vehicle.

As shown in Figs. 1 and 2, a work seat 64 is formed in the upper housing portion 48 of the housing assembly 24. The work seat 64 provides a convenient location for a user to sit while operating the air compressor 20. The illustrated work seat 64 is a depression formed in an upper panel defined by the upper housing portion 48 and includes a plurality of ridges 68. The depression is ergonomically shaped for fit and comfort of the user. The ridges 68 increase friction and provide interferences to inhibit the user, as well as small items, from unintentionally sliding or rolling off the seat 64.

The air tank 32 is positioned substantially within the housing assembly 24 and is sandwiched between the side housing portions 40, 44. As shown in Fig. 5, the illustrated air tank 32 has a generally flattened or torso spherical shape (i.e., a "pancake" style air tank) with an outer diameter D and a width W. The outer diameter D is generally greater than the width W due to the flattened shape of the tank 32. In some embodiments, a ratio of the diameter D to the width W is between about 1.5 and about 2.0. In the illustrated embodiment, the diameter D of the tank 32 is about 32 centimeters (cm) and the width W of the tank 32 is about 20 cm such that the ratio is about 1.6. In addition, the volume of the tank 32 is about three gallons and the maximum operating pressure of the tank 32 is approximately 135 psi. In other embodiments, the dimensions, the ratio, the volume, or the maximum operating pressure of the air tank 32 may be relatively larger or smaller for use in portable air compressors having different size and power specifications.

As shown in Figs. 1-5, the air tank 32 is oriented generally vertically within the housing assembly 24. That is, the tank 32 is oriented such that the outer diameter D is measured parallel to the direction of gravity and represents a height of the tank 32 when the air compressor 20 is in either the operating position (Fig. 3) or the storage position (Fig. 4). The diameter D of the tank 32 is thereby measured in a direction generally perpendicular to the lower and front panels of the housing assembly 24, while the width W of the tank 32 is measured in a direction generally parallel to both the lower and front panels of the housing assembly 24. Orienting the tank 32 in such a manner reduces the overall width of the portable air compressor 20, making the compressor 20 easier to store and transport. In addition, vertically orienting the air tank 32 increases the overall height of the housing assembly 24 (compared to air compressors with horizontally orientated air tanks) such that the work seat 64 is at a more appropriate level, or height, for users while sitting.

Referring to Fig. 5, the portable air compressor 20 includes a seal member 72 that receives and surrounds the tank 32. The illustrated seal member 72 includes four curved portions 72A, 72B, 72C, 72D that are each composed of an elastomeric material and are coupled to inner surfaces 76, 78 of the side housing portions 40, 44. The curved portions 72A-72D generally follow the shape and contour of the side housing portions 40, 44 such that the seal member 72 is not visible when the air tank 32 is positioned within the housing assembly 24. The seal member 72 helps dampen and absorb vibrations from being transmitted to the tank 32 when the motor/compressor system 36 is running.

The motor/compressor system 36 is positioned within the housing assembly 24 adjacent to the air tank 32 and the wheels 58. Positioning the motor/compressor system 36 adjacent to the wheels 58 helps stabilize the air compressor 20 when the compressor 20 is in both the operating and storage positions because the system 36 remains relatively close to the ground or other surface S. The motor/compressor system 36 includes a compressor in communication with the tank 32 and a motor electrically coupled to the compressor. The compressor draws ambient air from the environment through vents 80 (Figs. 1-4) in the housing assembly 24, compresses the air, and directs the compressed air into the tank 32 for storage. In some embodiments, the compressor may be, for example, a reciprocating compressor, a rotary screw compressor, a rotary vane compressor, or the like. In other embodiments, other suitable compressors may be employed.

The motor selectively provides power to the compressor to run the compressor. A power cord 82 (Fig. 1) electrically connects the motor to a wall outlet, selectively powering the motor. In the illustrated embodiment, the motor is a universal motor capable of using an AC supply current. In other embodiments, the motor may be a brushed or brushless DC motor, an induction motor, an AC synchronous motor, a stepper motor, or any other suitable electric motor. In further embodiments, the electric motor may be replaced by a gasoline or diesel engine and an alternator. In still other embodiments, the air compressor 20 may include a portable and rechargeable DC power source, such as a battery pack or fuel cell.

As shown in Figs. 1 and 5, the portable air compressor 20 includes a control assembly 84 coupled to the housing assembly 24. The control assembly 84 is supported on the front panel of the housing assembly 24 between the secondary feet 54. When the air compressor 20 is in the operating position (Fig. 3), the control assembly 84 is readily visible and engageable by a user. When the air compressor 20 is moved to the storage position (Fig. 4), the control assembly 84 generally faces the surface S. In this position, the control assembly 84 is protected from unintentional or accidental actuation.

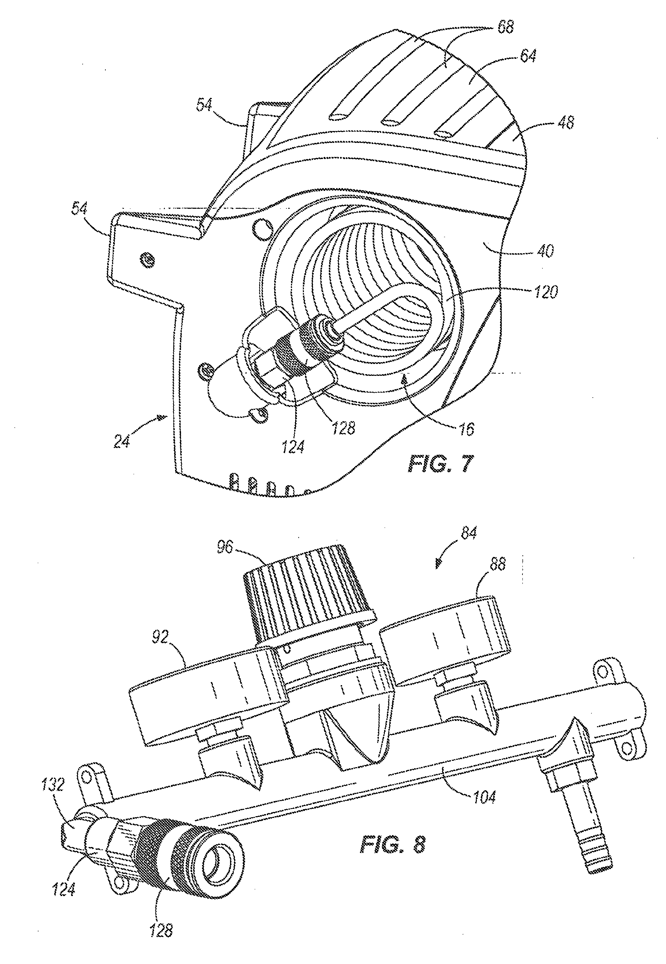

The illustrated control assembly 84 includes a pair of gauges 88, 92, a regulator knob 96, and a power switch 100 extending outwardly through the front panel of the upper housing portion 48. The gauges 88, 92 are coupled to a manifold 104 (Figs. 5 and 8) that is in communication with the air tank 32. Each gauge 88, 92 includes a display that is visible to a user when the compressor 20 is in the operating position (Fig. 3) to display a pressure within the manifold 104. The first gauge 88 displays the pressure of the compressed air stored within the tank 32, while the second gauge 92 displays an output pressure of the air (i.e., the pressure of the compressed air being discharged from the tank 32). The displays of the illustrated gauges 88, 92 may be analog or digital displays. The regulator knob 96 is coupled to the manifold 104 between the first gauge 88 and the second gauge 92. The regulator knob 96 is rotatable by a user to adjust the output pressure from the air tank 32 for different applications (e.g., for pneumatic power tools requiring different operating pressures). The power switch 100 is electrically coupled to the motor/compressor system 36 to turn the motor ON and OFF.

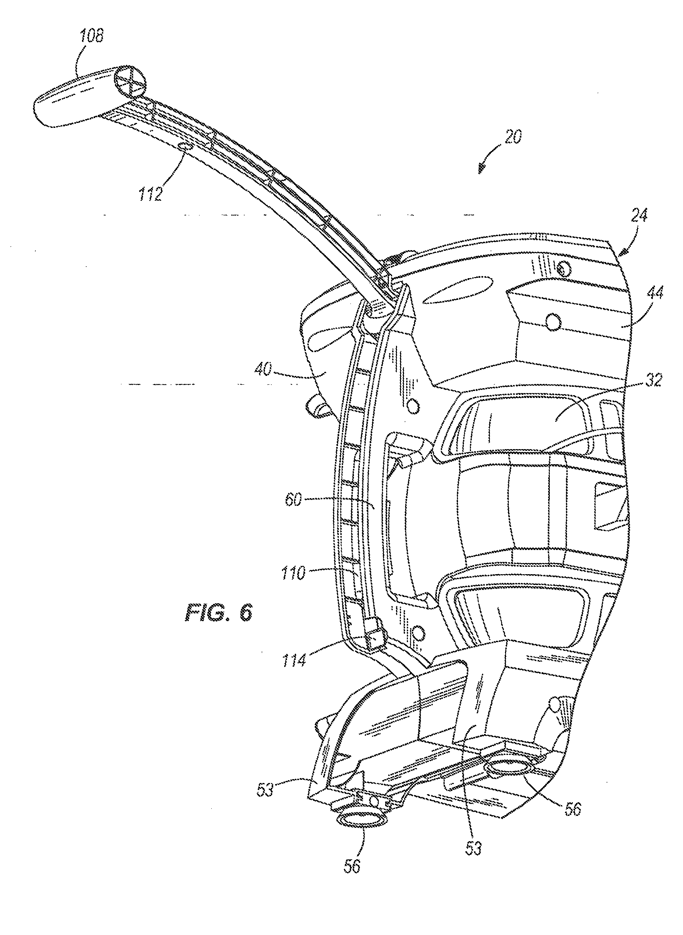

The illustrated air compressor 20 also includes a pull handle 108 pivotally coupled to the housing assembly 24. In the illustrated embodiment, the pull handle 108 is coupled between the side housing portions 40, 44 and is movable between a first, lowered or storage, position (Fig. 2) and a second, raised or operative, position (Fig. 6). When in the storage position, the pull handle 108 fits within a groove 110 (Fig. 6) formed in the housing assembly 24 such that the handle 108 is generally flush with an exterior of the housing assembly 24. When in the operative position, the pull handle 108 extends outwardly from the housing assembly 24 to help tilt the compressor 20 relative to the surface S until the wheels 58 engage the surface S. Once the wheels 58 contact the surface S, the handle 108 may be used pull the compressor 20 along the surface S. In some situations, the pull handle 108 may also be used to push the compressor 20 along the surface S. In other embodiments, the pull handle 108 may be a telescoping handle that is extendable and collapsible from a storage position and an operative position, respectively.

In the illustrated embodiment, the pull handle 108 includes a locking mechanism to releasably secure the handle 108 in the lowered position. As shown in Fig. 6, a magnetic element 112 is coupled to the pull handle 108 and a metallic element 114 (e.g., a steel plate) is coupled to the housing assembly 24 within the groove 110. When the handle 108 is lowered, the magnetic element 112 magnetically couples to the metallic element 114 to releasably secure the handle 108 within the groove 110. In other embodiments, the relative positions of the magnetic element 112 and the metallic element 114 may be reversed or the elements 112, 114 may be located elsewhere on the pull handle 108 and the housing assembly 24. In still other embodiments, the housing assembly 24 may include a spring and clip mechanism, a cam mechanism, or another suitable locking mechanism to releasably secure the handle 108 within the groove 110.

As shown in Figs. 1-4, a generally cylindrical passageway 116 extends through the side housing portions 40, 44 of the housing assembly 24. The illustrated passageway 116 is shaped and sized to receive an air hose 120 (Fig. 7) to store the hose 120 when not in use. As shown in Fig. 7, the air hose 120 is a plastic, self-reeling air hose that coils or winds-up automatically between uses. When the air hose 120 is wound-up, the hose 120 fits substantially within the passageway 116 for convenient storage.

As shown in Figs. 7 and 8, the portable air compressor 20 includes an air hose connector 124 positioned adjacent to one end of the passageway 116. The hose connector 124 is coupled to the manifold 104 and in communication with the air tank 32. In the illustrated embodiment, the hose connector 124 includes a quick-connect coupling 128 configured to connect to the air hose 120 and an L-shaped tube 132 extending from the manifold 104. The tube 132 may rotate within the manifold 104, allowing some relative movement of the hose connector 124 relative to the housing assembly 24 if a user pulls on the hose 120. An elastomeric seal, such as an O-ring, is positioned between the tube 132 and the manifold 104 to facilitate rotation of the tube 132 while preventing air from leaking out of the manifold 104. In some embodiments, the hose connector 124 may also or alternatively be pivotable into and away from the passageway 116. In further embodiments, the hose connector 124 may be located elsewhere on the housing assembly 24.

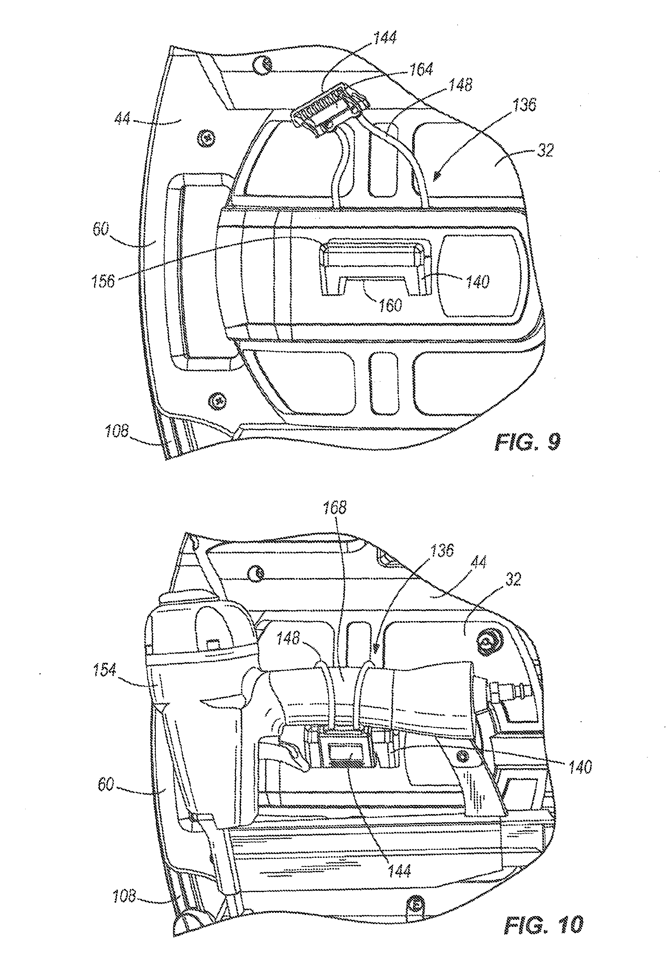

As shown in Figs. 9 and 10, the portable air compressor 20 also includes a power tool (e.g., pneumatic) connecting portion 136 on each side panel of the housing assembly 24. Although only one connecting portion 136 is described in detail below, it should be readily apparent that the other power tool connecting portion is substantially similar and operates in the same manner. The illustrated connecting portion 136 includes a ledge 140 extending from the side housing portion 44, a clip 144 connectable to the ledge 140, and a strap member 148 coupling the clip 144 to the housing assembly 24. In the illustrated embodiment, the ledge 140 is integrally formed as a single piece with the side housing portion 44. In other embodiments, the ledge 140 may be a separate component that is removably coupled to the side housing portion 44 when needed. The illustrated ledge 140 includes a generally planar surface 152 (Figs. 1 and 2) to support a power tool 154, a lip 156 to inhibit the power tool 154 from sliding off the surface 152, and an undercut 160 for receiving a flange 164 of the clip 144.

The illustrated strap member 148 is a bungee cord that stretches to fit around a portion of the power tool 154, thereby capturing the power tool 154 between the ledge 140 and the strap member 148. In other embodiments, other types of ropes, cords, or cables may be employed to connect the clip 144 to the side housing portion 40 and capture the power tool 154 on the ledge 140. Additionally or alternatively, in some embodiments the clip 144 may be omitted such that the strap member 148 directly engages a projection on the ledge 140.

As shown in Fig. 10, the power tool 154 is supported on the ledge 140 and coupled to the air compressor 20. The illustrated power tool 154 is a pneumatic nail gun, or nailer, although other pneumatic or non-pneumatic power tools may also be supported by the connecting portion 136. To connect the power tool 154 to the air compressor 20, the tool 154 is positioned on the ledge 140 and the strap member 148 is pulled around a handle portion 168 of the power tool 154. The flange 164 of the clip 144 engages the undercut 160 formed in the ledge 140, thereby securing the power tool 154 to the air compressor 20.

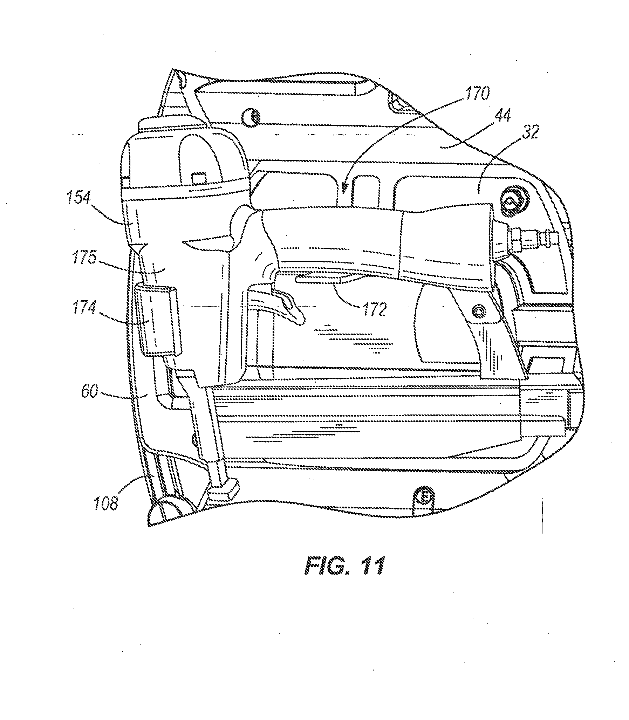

Fig. 11 illustrates another embodiment of a tool connecting portion 170 for use with the portable air compressor 20. The illustrated connecting portion 170 includes a ledge 172 extending from the side housing portion 44 to support the power tool 154 and a strap member 174 that engages the power tool 154 to secure the power tool 154 in place. In the illustrated embodiment, the strap member 174 is a clip that is pivotally coupled to the housing assembly 24 and directly engages a body portion 175 of the power tool 154. In other embodiments, other suitable connecting mechanisms may be employed to secure the power tool 154 to the portable air compressor 20.

Referring back to Fig. 5, the illustrated air compressor 20 includes a storage tray 176 formed in the upper housing portion 48 of the housing assembly 24 adjacent to the work seat 64. The storage tray 176 is configured to store fasteners (e.g., nails, screws, bolts, etc.), tire gauges, air fittings, spare parts, or other accessories that may be useful during operation of the compressor 20.

As shown in Figs. 1 and 2, a cover 180 is hingedly coupled to the upper housing portion 48 between the storage tray 176 and the work seat 64. The cover 180 is shaped and sized to fit over the storage tray 176 and allow selective access to the tray 176. The cover 180 includes a spring latch 184 to maintain the cover 180 in a closed position even when the air compressor 20 is tipped to the storage position (Fig. 4). In some embodiments, the cover 180 may include a torsion spring or other biasing member to bias the cover 180 to the closed position. Additionally or alternatively, the cover 180 may include a lock mechanism to inhibit unwanted users from accessing the tray 176.

Although the invention has been described in detail with reference to certain preferred embodiments, variations and modifications exist within the scope defined by the following claims.

## Claims

1. An air compressor comprising:
a housing assembly (24) including
a firstside housing portion (40),
a secondside housing portion (44),
an upper housing portion (48);
a first foot (52) coupled to and extending from a lower panel of the housing assembly (24);
a second foot (54) coupled to and extending from a front panel of the housing assembly (24);
two wheels (58) rotatably coupled to the housing assembly (24), each wheel (58) being coupled to a respective side housing portion (40,44), adjacent to the first foot (52),
a compressor system (36) positioned substantially within the housing assembly (24), the compressor system (36) operable to compress ambient air; and
a tank (32) positioned substantially within the housing assembly (24) in communication with the compressor system (36) to receive pressurized air from the compressor system (36),
wherein the housing assembly (24) is pivotable about the wheels (58) between a first position, in which the first foot (52) engages a surface during operation of the air compressor (20), and a second position, in which the second foot (54) and the wheels (58) engage the surface during storage of the air compressor (20), and
wherein the tank (32) has a generally flattened spherical shape with a diameter and a width **characterized in that** the width of the tank (32) is less than the diameter, and wherein the tank (32) is oriented generally vertically within the housing assembly (24) such that the diameter represents a height of the tank (20) in both the first and second positions.

2. The air compressor of claim1 further comprising a control assembly coupled to the second panel of the housing assembly, wherein the control assembly is operable to monitor and control operation of the compressor system.

3. The air compressor of claim wherein the first side housing portion (40) and the second side housing portion (44) are coupled together to define a lift handle(60) to facilitate lifting the air compressor when the housing assembly is in the second position.

4. The air compressor of claim3, wherein the handle is pivotally coupled to the housing assembly, and wherein the handle is movable between a first position, in which the handle is at least partially received in the housing assembly for storage, and a second position, in which the handle extends outwardly from the housing assembly.

5. The air compressor of claim4, wherein one of the handle and the housing assembly includes a magnetic element and the other of the handle and the housing assembly includes a metallic element, and wherein the magnetic element couples to the metallic element to releasably secure the handle in the first position.

6. The air compressor of claim 1 further comprising:
a work seat formed in the upper housing portion (48) of the housing assembly (24), or
a storage tray formed in the housing assembly and a cover pivotally coupled to the housing assembly adjacent to the storage tray wherein the cover allows selective access to the storage tray, or
a tool connecting portion coupled to the housing assembly wherein the tool connecting portion includes a ledge extending from the housing assembly for supporting a power tool and a strap member coupled to the housing assembly for securing the power tool on the ledge.

7. The air compressor of claim 1, further comprising a seal member coupled to the housing assembly, wherein the seal member surrounds at least a portion of the tank to dampen vibrations.

8. The air compressor of any preceding claim wherein the housing assembly defines a passageway for receiving an air hose, and further comprising a hose connector coupled to the housing assembly adjacent to the passageway, wherein the hose connector is in communication with the tank and is configured to couple to the air hose to direct pressurized air from the tank into the air hose.

9. The air compressor of any preceding claim wherein a ratio of the diameter of the tank to the width of the tank is between about .5 and about 2.0.

## Patentansprüche

1. Luftverdichter, der Folgendes umfasst:
eine Gehäusebaugruppe (24), die Folgendes einschließt:
einen ersten seitlichen Gehäuseabschnitt (40),
einen zweiten seitlichen Gehäuseabschnitt (44),
einen oberen Gehäuseabschnitt (48),
einen ersten Fuß (52), der an eine untere Platte der Gehäusebaugruppe (24) gekoppelt ist und sich von derselben aus erstreckt,
einen zweiten Fuß (54), der an eine vordere Platte der Gehäusebaugruppe (24) gekoppelt ist und sich von derselben aus erstreckt,
zwei Räder (58), die drehbar an die Gehäusebaugruppe (24) gekoppelt sind, wobei jedes Rad (58), angrenzend an den ersten Fuß (52), an einen jeweiligen seitlichen Gehäuseabschnitt (40, 44) gekoppelt ist,
ein Verdichtersystem (36), das im Wesentlichen innerhalb der Gehäusebaugruppe (24) angeordnet ist, wobei das Verdichtersystem (36) funktionsfähig ist, um Umgebungsluft zu verdichten, und
einen Tank (32), der im Wesentlichen innerhalb der Gehäusebaugruppe (24) in Verbindung mit dem Verdichtersystem (36) angeordnet ist, um Druckluft von dem Verdichtersystem (36) aufzunehmen,
wobei die Gehäusebaugruppe (24) um die Räder (58) geschwenkt werden kann zwischen einer ersten Stellung, in welcher der erste Fuß (52) eine Oberfläche in Eingriff nimmt, während eines Betriebs des Luftverdichters (20), und einer zweiten Stellung, in welcher der zweite Fuß (54) und die Räder (58) eine Oberfläche in Eingriff nehmen, während der Aufbewahrung des Luftverdichters, und
wobei der Tank (32) eine im Allgemeinen abgeflachte sphärische Form mit einem Durchmesser und einer Breite hat, **dadurch gekennzeichnet, dass** die Breite des Tanks (32) geringer ist als der Durchmesser, und wobei der Tank (32) im Allgemeinen vertikal innerhalb der Gehäusebaugruppe (24) ausgerichtet ist derart, dass der Durchmesser sowohl in der ersten als auch in der zweiten Stellung eine Höhe des Tanks (32) darstellt.

2. Luftverdichter nach Anspruch 1, der ferner eine Steuerungsbaugruppe umfasst, die an eine zweite Tafel der Gehäusebaugruppe gekoppelt ist, wobei die Steuerungsbaugruppe funktionsfähig ist, um den Betrieb des Verdichtersystems zu überwachen und zu steuern.

3. Luftverdichter nach Anspruch 1, wobei der erste seitliche Gehäuseabschnitt (40) und der zweite seitliche Gehäuseabschnitt (44) aneinander gekoppelt sind, um einen Hebegriff (60) zu definieren, um ein Anheben des Luftverdichters zu erleichtern, wenn sich die Gehäusebaugruppe in der zweiten Stellung befindet.

4. Luftverdichter nach Anspruch 3, wobei der Griff schwenkbar an die Gehäusebaugruppe gekoppelt ist und wobei der Griff bewegt werden kann zwischen einer ersten Stellung, in welcher der Griff zur Aufbewahrung wenigstens teilweise in der Gehäusebaugruppe aufgenommen wird, und einer zweiten Stellung, in der sich der Griff von der Gehäusebaugruppe aus nach außen erstreckt.

5. Luftverdichter nach Anspruch 4, wobei die eine der Komponenten Griff und Gehäusebaugruppe ein magnetisches Element einschließt und die andere der Komponenten Griff und Gehäusebaugruppe ein metallisches Element einschließt und wobei das magnetische Element an das metallische Element gekoppelt wird, um den Griff lösbar in der ersten Stellung zu befestigen.

6. Luftverdichter nach Anspruch 1, der ferner Folgendes umfasst:
einen Arbeitssitz, der in dem oberen Gehäuseabschnitt (48) der Gehäusebaugruppe (24) geformt ist, oder
ein Aufbewahrungsfach, das in der Gehäusebaugruppe geformt ist und eine Abdeckung, die angrenzend an das Aufbewahrungsfach schwenkbar an die Gehäusebaugruppe gekoppelt ist, wobei die Abdeckung einen selektiven Zugang zu dem Aufbewahrungsfach ermöglicht, oder
einen Werkzeugverbindungsabschnitt, der an die Gehäusebaugruppe gekoppelt ist, wobei der Werkzeugverbindungsabschnitt eine Leiste, die sich von der Gehäusebaugruppe aus erstreckt, um ein angetriebenes Werkzeug zu tragen, und ein Bandelement, das an die Gehäusebaugruppe gekoppelt ist, um das angetriebene Werkzeug an der Leiste zu befestigen, einschließt.

7. Luftverdichter nach Anspruch 1, der ferner ein Dichtungselement umfasst, das an die Gehäusebaugruppe gekoppelt ist, wobei das Dichtungselement wenigstens einen Abschnitt des Tanks umschließt, um Schwingungen zu dämpfen.

8. Luftverdichter nach einem der vorhergehenden Ansprüche, wobei die Gehäusebaugruppe einen Durchgang zum Aufnehmen eines Luftschlauchs definiert, und der ferner einen Schlauchverbinder umfasst, der angrenzend an den Durchgang an die Gehäusebaugruppe gekoppelt ist, wobei der Schlauchverbinder ist Verbindung mit dem Tank steht und dafür konfiguriert ist, an den Luftschlauch gekoppelt zu werden, um Druckluft aus dem Tank in den Luftschlauch zu leiten.

9. Luftverdichter nach einem der vorhergehenden Ansprüche, wobei ein Verhältnis des Durchmessers des Tanks zu der Breite des Tanks zwischen etwa 1,5 und etwa 2,0 beträgt.

## Revendications

1. Compresseur d'air, comprenant :
un assemblage de boîtier (24) englobant :
une partie de boîtier d'un premier côté (40) ;
une partie de boîtier d'un deuxième côté (44) ;
une partie de boîtier supérieure (48) ;
un premier pied (52) accouplé à un panneau inférieur de l'assemblage de boîtier (24) et s'étendant à partir de celui-ci ;
un deuxième pied (54), accouplé à un panneau avant de l'assemblage de boîtier (24) et s'étendant à partir de celui-ci ;
deux roues (58), accouplées de manière rotative à l'assemblage de boitier (24), chaque roue (58) étant accouplée à une partie de boîtier d'un côté respectif (40, 44) adjacent au premier pied (52) ;
un système de compresseur (36), positionné pratiquement dans l'assemblage de boîtier (24), le système de compresseur (36) servant à comprimer l'air ambiant ; et
un réservoir (32), positionné pratiquement dans l'assemblage de boîtier (24), en communication avec le système de compresseur (36) pour recevoir l'air sous pression du système de compresseur (36) ;
dans lequel l'assemblage de boîtier (24) peut pivoter autour des roues (58) entre une première position, dans laquelle le premier pied (52) s'engage dans une surface pendant le fonctionnement du compresseur d'air (20), et une deuxième position, dans laquelle le deuxième pied (54) et les roues (58) s'engagent dans la surface au cours du rangement du compresseur d'air (20) ; et
dans lequel le réservoir (32) a une forme sphérique généralement aplatie avec un diamètre et une largeur, **caractérisé en ce que** la largeur du réservoir (32) est inférieure au diamètre, le réservoir (32) étant orienté en général de manière verticale dans l'assemblage de boîtier (24), de sorte que le diamètre représente une hauteur du réservoir (20) à la fois dans les première et deuxième positions.

2. Compresseur d'air selon la revendication 1, comprenant en outre un assemblage de commande, accouplé au deuxième panneau de l'assemblage de boîtier, l'assemblage de commande étant destiné à surveiller et à contrôler le fonctionnement du système de compresseur.

3. Compresseur d'air selon la revendication 1, dans lequel la partie de boîtier du premier côté (40) et la partie de boîtier du deuxième côté (44) sont accouplées pour définir une poignée de soulèvement (60), pour faciliter le soulèvement du compresseur d'air lorsque l'assemblage de boîtier se trouve dans la deuxième position.

4. Compresseur d'air selon la revendication 3, dans lequel la poignée est accouplée de manière pivotante à l'assemblage de boîtier, la poignée pouvant être déplacée entre une première position, dans laquelle la poignée est au moins en partie reçue dans l'assemblage de boîtier en vue du rangement, et une deuxième position, dans laquelle la poignée s'étend vers l'extérieur de l'assemblage de boîtier.

5. Compresseur d'air selon la revendication 4, dans lequel un élément, la poignée ou l'assemblage de boîtier, englobe un élément magnétique, l'autre élément, la poignée ou l'assemblage de boîtier englobant un élément métallique, l'élément magnétique étant accouplé à l'élément métallique pour fixer de manière amovible la poignée dans la première position.

6. Compresseur d'air selon la revendication 1, comprenant en outre :
un siège de travail, formé dans la partie de boitier supérieure (48) de l'assemblage de boîtier (24, ou
un plateau de rangement, formé dans l'assemblage de boitier, et un couvercle accouplé de manière pivotante à l'assemblage de boîtier près du plateau de rangement, le couvercle donnant sélectivement accès au plateau de rangement ; ou
une partie de connexion d'un outil accouplée à l'assemblage de boîtier, la partie de connexion de l'outil englobant une moulure s'étendant à partir de l'assemblage de boîtier pour supporter un outil électrique, et un élément d'attache accouplé à l'assemblage de boîtier pour fixer l'outil électrique sur la moulure.

7. Compresseur d'air selon la revendication 1, comprenant en outre un élément de joint d'étanchéité accouplé à l'assemblage de boîtier, l'élément de joint d'étanchéité entourant au moins une partie du réservoir pour amortir les vibrations.

8. Compresseur d'air selon l'une quelconque des revendications précédentes, dans lequel l'assemblage de boîtier définit un passage pour recevoir un tuyau à air, et comprenant en outre un raccord de tuyau accouplé à l'assemblage de boîtier près du passage, le raccord du tuyau étant en communication avec le réservoir et étant configuré de sorte à être accouplé au tuyau à air pour diriger l'air sous pression du réservoir dans le tuyau à air.

9. Compresseur d'air selon l'une quelconque des revendications précédentes, dans lequel un rapport entre le diamètre du réservoir et la largeur du réservoir est compris entre environ 1,5 et environ 2,0.
